# EUROPEAN PATENT APPLICATION

(11) **EP 2 607 880 A1**
(43) Date of publication of application: **26.06.2013**
(21) Application number: 11195038.2
(22) Date of filing: 21.12.2011
(51) Int. Cl.: G01N 1/28, A24B 15/24, A24B 15/26

(54) **Method of producing an extract of a smokeless tobacco product**

(71) Applicant: Philip Morris Products S.A., 2000 Neuchâtel (CH)
(72) Inventor: Diekmann, Joerg, 51469 Bergisch Gladbach (DE); Nett, Tanja, 53840 Troisdorf (DE); Ottmueller, Thomas, 51145 Cologne (DE); Wittke, Sandra, 42929 Wermelskirchen (DE); Zenzen, Volker, 51143 Cologne (DE)
(74) Representative: Taylor, Gillian Claire

(57) **Abstract**

A method of producing an extract of a smokeless tobacco product comprises the steps of: extracting the smokeless tobacco product in a solvent; filtering the extract to separate the macroscopic particles of the smokeless tobacco product from the liquid extract; and filtering the resultant extract through a sequence of two or more filters of decreasing pore size, wherein at least one filter has a pore size of less than 0.5 microns and wherein the filtration is carried out under a pressure of 3 to 10 bar. Optionally, the method may further comprise a subsequent sterilisation step to sterilise the filtered extract.

## Description

The present invention relates to a method for the production of an extract of a smokeless tobacco product. The invention finds particular application in the production of a liquid extract of a smokeless tobacco product which is suitable for use in chemical analysis and biological testing.

The use of *in vitro* toxicology tests to carry out a biological analysis of the smoke collected during the combustion of a conventional smoking article is well known. Suitable methods for the collection of the smoke and the subsequent testing of the collected smoke sample are well established. For example, an Ames assay is commonly used to evaluate the mutagenicity of the smoke and a Neutral Red Uptake (NRU) assay may be used to evaluate the cytotoxocity of the smoke.

There is currently a relatively limited amount of chemical and toxicological information for smokeless tobacco products. The existing methods for toxicological testing have been developed for conventional combustible tobacco products and are unsuitable for the evaluation of smokeless tobacco products, such as snus, in which the tobacco is not combusted and therefore no smoke is generated. Extraction methods for producing an extract of a smokeless tobacco product for the purposes of chemical and toxicological testing have been previously proposed. However, the application of the resultant extracts in certain types of common biological assays has been found to be unsuccessful. In addition, the previously proposed extraction methods have typically required relatively time consuming steps to be performed. This means that the extracts cannot be produced in a particularly efficient manner.

It would be desirable to provide an improved method for the production of an extract from a smokeless tobacco product which can be carried out more efficiently than existing extraction processes. In particular, it would be desirable if such a method could be carried out faster and could achieve a higher efficiency extraction of the tobacco components from the smokeless tobacco product. It would further be desirable if such a method could be used to provide a clean extract of the smokeless tobacco product which can be successfully analysed in common biological assays used in the tobacco industry. It would further be desirable if a method could be provided which is applicable to a variety of different types of smokeless tobacco products which may have differing levels of constituents such as nicotine and water.

According to the present invention there is provided a method of producing an extract of a smokeless tobacco product, the method comprising the steps of: (a) extracting the smokeless tobacco product in a solvent; (b) filtering the extract from step (a) to separate the macroscopic particles of the smokeless tobacco product from the liquid extract; and (c) filtering the extract obtained from step (b) through a sequence of two or more filters of decreasing pore size. At least one filter in the sequence of filters used in step (c) has a pore size of less than 0.5 microns. The filtration in step (c) is performed under positive pressure, with a pressure of about 3 to 10 bar.

The present invention provides an efficient three step method for producing an extract from a variety of smokeless tobacco products. In contrast to conventional methods, which typically use a centrifugation method to separate the particles of tobacco material from the liquid extract, the method of the present invention uses a filtration step for the separation. This advantageously provides faster and more convenient separation which enables the method of the present invention to be carried out more efficiently. In addition, the combination of steps of the method of the present invention has been found to produce a cleaner extract from the smokeless tobacco product, which has reduced contamination from tobacco fibres.

The method of the present invention has also been found to achieve good reproducibility of the extracts from the smokeless tobacco material, which have a consistent concentration of the tobacco components, as demonstrated by a consistent nicotine content in the extract of the individual smokeless tobacco material. This is important in ensuring that accurate and reliable results can be obtained from any toxicological tests that are carried out on the extracts.

The method of the present invention has advantageously been found to provide an improved extraction efficiency compared with previously proposed extraction techniques. This means that a greater proportion of the tobacco components can be extracted from the tobacco material. Unlike the extracts produced with previously proposed extraction methods for smokeless tobacco products, the extracts produced by the method of the present invention have advantageously been found to be consistently suitable for responsive testing in the Ames and NRU assay, as well as in other biological assays. The method of the present invention therefore provides significant improvements in the feasibility and reliability of toxicological testing of smokeless tobacco extracts.

The first step of the method of the present invention is an extraction step in which the smokeless tobacco product is added to a suitable solvent so that the tobacco components are transferred from the smokeless tobacco product into the solvent to form a liquid extract. Suitable extraction techniques would be well known to the skilled person. Preferably, the smokeless tobacco product is held within the solvent for at least 60 minutes. Particularly preferably, the smokeless tobacco product and the solvent are shaken together, for example in a reciprocating shaker. Typically, no adjustment of the pH of the solvent is necessary for the extraction step.

Preferably, the extraction step is carried out at between about 10°C and about 40°C, more preferably between about 18°C and about 28°C and most preferably at around room temperature (about 22°C).

Preferably, the ratio of the smokeless tobacco material to the solvent is between about 200 and 600 grams of tobacco material per litre of solvent, more preferably about 500 grams per litre. The amount of the smokeless tobacco material may need to be varied depending on the moisture content of the material.

For certain smokeless tobacco products, including compressed tobacco products, a special pre-treatment and extraction may be required prior to the filtration step (b). In particular, for compressed tobacco products, the extract is preferably produced with 1 gram of the tobacco product for every 15 millilitres of the solvent, which is preferably artificial saliva. The solution of the compressed tobacco product in the solvent is preferably chopped or minced to reduce the size of the particles of tobacco material, for example in a hand blender. The extraction step is then preferably carried out at about 30 °C for 30 minutes, in a sonification bath.

Preferred solvents for use in the extraction step of the method of the present invention include but are not limited to water, phosphate buffered saline, dimethylsulfoxide (DMSO), and artificial saliva with or without enzymes. In particularly preferred embodiments of the present invention, the extraction step is carried out using a solvent of artificial saliva without enzymes. A suitable composition of artificial saliva is set out in the example below and can be prepared as set out in German Standard DIN V 53160-1 (2002). The use of artificial saliva as the solvent for the extraction is particularly desirable for the extraction of oral tobacco products, since the extraction can most closely simulate the extraction of tobacco components into human saliva during actual oral use of the tobacco product.

After the extraction step has been completed, a separation step is carried out to separate the liquid extract from the macroscopic tobacco particles. Once removed from the solution, the macroscopic tobacco particles can be discarded, as subsequent method steps will be carried out on the liquid extract. The separation step is carried out by filtration, preferably using an inert filter such as a glass fibre filter. Preferably, the filtration step removes any macroscopic tobacco particles that are visible to the naked eye.

The liquid extract obtained from the separation step is then filtered in the subsequent filtration step (c). The filtration step is carried out in order to remove microscopic tobacco particles from the extract. This ensures that the extract is as clean as possible for testing in biological assays.

The filtration step is carried out by passing the liquid extract from step (b) through a sequence of two or more filters of decreasing pore size. Preferably, the liquid extract is passed through a sequence of three or more filters of decreasing pore size. At least one of the filters through which the liquid extract is passed must have a pore size of less than 0.5 microns. This is essential in order to ensure that the resultant filtered extract is suitable for biological assays, in particular for assays with a short-term exposure to the extract (typically less than 24 hours), such as the NRU assay.

Preferably, the first filter through which the liquid extract is passed has a pore size of no more than 5 microns. The first filter has the largest pore size of the sequence of filters and therefore subsequent filters will also have pore size of less than 5 microns. Particularly preferably, the two or more filters have decreasing pore sizes within the range of 5 microns to 0.45 microns. For example, in one preferred embodiment, the liquid extract is filtered through a sequence of three filters having pore sizes of 5 microns, 1.2 microns and 0.45 microns.

The filtration through each of the filters may be carried out in a step wise manner, so that the liquid extract is filtered through each filter in turn. Alternatively, the filtration step may be carried out in a single step, with overlapping filters wherein the pore size of the filters decreases from top to bottom. This arrangement enables the filtration of the liquid extract to be carried out in a particularly efficient way so that the method of the present invention can advantageously be carried out in a shorter time than previously proposed methods. For example, in certain methods according to the invention, the smokeless tobacco extract can be produced in approximately half the time taken using previously proposed methods.

It is essential to the invention that the pressure filtration is carried out under a pressure of about 3 to 10 bar, preferably about 4 to 6 bar and most preferably about 5 bar. Pressure may be applied using a suitable compressed gas, such as nitrogen or cleaned air.

The filters used to carry out step (c) of the method of the present invention should be formed of an inert material and are preferably sterilised prior to filtration. Preferably, the filters are polytetrafluoroethylene (PTFE) filters, which can be used in conjunction with conventional pressure filtration apparatus. The filters are preferably rinsed with ethanol before the liquid extract is filtered.

Methods according to the present invention for producing smokeless tobacco product extracts may incorporate an additional step (d) of sterilising the liquid extract produced from the filtration step (c) as described above. This enables a sterile extract to be produced, which is particularly suitable for certain biological assays, in particular for assays with a long-term exposure to the extract (typically greater than 24 hours), such as the Ames assay.

Preferably, the sterilisation of the liquid extract is carried out by incorporating an additional filtration step after the filtration step (c) described above. The additional filtration step is preferably carried out with a filter having a pore size of 0.22 microns or smaller. In certain cases, the additional filtration step may be combined with the filtration step (c) so that the filter having a pore size of 0.22 microns or smaller is incorporated at the end of the sequence of filters of decreasing pore size. The filter used for the sterilisation step is preferably a PTFE filter. Preferably, in order to ensure complete sterilisation, the liquid extract obtained from filtration step (c) is subsequently passed through a glass microfiber pre-filter prior to passing it through the filter having a pore size of 0.22 microns or smaller.

Methods according to the present invention may further comprise the step of conducting one or more biological assays on a sample of the extract obtained from step (c) or step (d), where step (d) is carried out. As discussed above, the extracts produced by the three step method of the present invention have been found to have particularly successful application to the biological assays which are commonly used to characterise the cytotoxicity and mutagenicity of tobacco products and which are accepted by scientific and regulatory authorities.

For example, the smokeless tobacco extract obtained from step (c) has been found to have successful application in the Neutral Red Uptake (NRU) cytotoxicity assay, with activity shown for all tested samples of the extract. Suitable techniques for carrying out an NRU assay on the smokeless tobacco extracts produced by the method of the present invention are based on "The FRAME modified neutral red uptake cytotoxicity test, INVITTOX Protocol No. 3a, 1990", "BALB/c 3T3 cytotoxocity test, INVITTOX Protocol No. 46, 1992*'* and "The neutral red cytotoxicity assay, INVITTOX Protocol No. 64, 1992*",* all of which may be found in the ERGATT/FRAME databank of *in vitro* techniques in toxicology.

The sterilised smokeless tobacco extract obtained from step (d) of the method of the present invention has also been found to have successful application in differentiating mutagenic activity between liquid extracts from smokeless tobacco products by using the microsuspension version of the bacteria reverse mutation assay (Ames assay). Suitable techniques for carrying out an Ames assay on the sterile smokeless tobacco extracts produced by the method of the present invention are based on "Bacterial Reverse Mutation Test, OECD Guideline 471, 1997", *"*Revised methods for the Salmonella mutagenicity test, Maron, D.M. & Ames, B. N., Mutat. Res. 113: 173-215 (1983*)*", and "A simple modification of the Salmonella liquid incubation assay: increased sensibility for detecting mutagens in human urine, Kado, N.Y., Langley, D. & Eisenstadt, E, Mutat. Res. 121: 25-32 (1983*)*".

The extracts produced by the method of the present invention may also be effectively tested using other chemical analysis techniques or biological assays, as would be known to the skilled person.

Methods of the present invention for producing extracts of smokeless tobacco products can be conducted to provide extracts of a wide variety of non-combustible tobacco products including but not limited to snus, oral tobacco, chewing tobacco, dry snuff and wet snuff. The method of the present invention has advantageously been found to provide reproducible extracts that can successfully be tested in biological assays for smokeless tobacco products of varying compositions and water contents. The present invention therefore has broad application in the biological testing of smokeless tobacco products which cannot be analysed using conventional techniques developed for combustible tobacco products. This broad applicability also advantageously enables the direct comparison of smokeless tobacco products having potentially widely differing compositions.

The invention will now be further described, by way of example only:

### Example

In a method carried out according to the present invention, 40 grams of snus were extracted in 80 millilitres of artificial saliva having the composition shown in Table 1 below. The table indicates the compounds that are dissolved within a litre of artificial saliva, wherein the compounds are dissolved in distilled water and hydrochloric acid is used to adjust the pH of the artificial saliva to pH 6.8. Artificial saliva was prepared as set out in German Standard DIN V 53160-1 (2002).

**Table 1: Artificial saliva composition**

| **Artificial saliva component** | **Concentration (grams/litre)** |
|---|---|
| Magnesium chloride | 0.17 |
| Calcium chloride | 0.15 |
| Dipotassium hydrogen phosphate | 0.76 |
| Potassium carbonate | 0.53 |
| Sodium chloride | 0.33 |
| Potassium chloride | 0.75 |
| Hydrochloric acid (1%) | Addition up to pH 6.8 |

The snus and artificial saliva were shaken together at room temperature (22°C) for about 60 minutes using a GFL reciprocating shaker, Model 3018 working at 200 min⁻¹. After the extraction, the macroscopic particles of snus were removed from the extract by filtering the extract through a 92 mm Borgwaldt glass fibre filter (available as filter no. 80202841 from Borgwaldt Technik).

The resultant liquid extract was then filtered through an overlapping sequence of filters with decreasing pore size, using positive pressure filtration of about 5 bar. The filters were 47 mm PTFE filters having respective pore sizes of 5 microns, 1.2 microns and 0.45 microns (available as filter nos. 11842, 11803 and 11806, respectively, from Sartorius AG). The filtration was carried out using a pressure filtration device (available as SM 16249 from Sartorius AG) connected to a suction pump (available as no. 2436299 from Schott Duran). Prior to filtration, the PTFE filters were rinsed with approximately 2 millilitres of ethanol. The filtered liquid provides an extract of the snus product that can successfully be tested in biological assays.

In order to sterilise the extract, for example for the purposes of an Ames assay, the liquid extract obtained above was additionally filtered through a PTFE filter with a pore size of 0.2 microns (available as Millex-LG product no. SLLG025SS from Milipore) with borosilicate glass microfiber prefilter (available as Millex-AP product no. SLAP02550 from Milipore).

## Claims

1. A method of producing an extract of a smokeless tobacco product, the method comprising the steps of:
(a) extracting the smokeless tobacco product in a solvent;
(b) filtering the extract from step (a) to separate the macroscopic particles of the smokeless tobacco product from the liquid extract; and
(c) filtering the extract obtained from step (b) through a sequence of two or more filters of decreasing pore size, wherein at least one filter has a pore size of less than 0.5 microns and wherein the filtration is carried out under a pressure of 3 to 10 bar.

2. A method according to claim 1 further comprising the step of:
(d) sterilising the extract obtained from step (c).

3. A method according to claim 2 wherein the extract obtained from step (c) is sterilised by filtering the extract through a filter having a pore size of 0.22 microns or smaller.

4. A method according to any of claims 1 to 3 wherein the first filtration step in step (c) is carried out using a filter having a pore size of no more than 5 microns.

5. A method according to any preceding claim wherein step (c) is carried out with two or more overlapping filters of decreasing pore size.

6. A method according to any preceding claim wherein the solvent in step (a) is selected from the group consisting of: water, phosphate buffer saline, DMSO (dimethyl sulphoxide), and artificial saliva.

7. A method according to claim 6 wherein the solvent in step (a) is artificial saliva without enzymes.

8. A method according to any preceding claim wherein the ratio of the smokeless tobacco to the solvent in step (a) is between 200 and 600 grams of tobacco material per litre of solvent.

9. A method according to any preceding claim wherein step (b) is carried out with a glass fibre filter.

10. A method according to any preceding claim wherein step (c) is carried out with a sequence of two or more PTFE (polytetrafluoroethylene) filters.

11. A method according to claim 10 wherein the PTFE filters are rinsed with ethanol prior to filtration of the extract.

12. A method according to any preceding claim wherein the filtration in step (c) is carried out under a pressure of 4 to 6 bar.

13. A method according to any preceding claim wherein during step (a) the smokeless tobacco material and the solvent are shaken together for at least 60 minutes.

14. A method according to any preceding claim for producing an extract of a compressed tobacco product, the method further comprising a pre-treatment step carried out prior to step (a), wherein the pre-treatment step includes preparing a solution of the tobacco product in the solvent and blending the solution, and wherein the extraction step (a) is carried out at 30°C for 30 minutes in a sonification bath.

15. A method according to any preceding claim further comprising conducting one or more biological assays on a sample of the extract obtained from step (c).
